# EUROPÄISCHE PATENTSCHRIFT

(11) **EP 3 485 182 B1**
(45) Veröffentlichungstag und Bekanntmachung des Hinweises auf die Patenterteilung: **02.09.2020**
(21) Anmeldenummer: 16738469.2
(22) Anmeldetag: 14.07.2016
(51) Int. Cl.: F16H 48/22, F16H 48/14, F16H 48/19

(54) **SPERRBARES DIFFERENTIALGETRIEBE**
LOCKABLE DIFFERENTIAL TRANSMISSION
DIFFÉRENTIEL POUVANT ÊTRE BLOQUÉ

(43) Veröffentlichungstag der Anmeldung: 22.05.2019
(73) Patentinhaber: GKN Automotive Ltd., West Midlands, B37 7YE (GB)
(72) Erfinder: GAßMANN, Theodor, 53721 Siegburg (DE)
(74) Vertreter: Rössler, Matthias
(86) Internationale Anmeldenummer: PCT/EP2016/066778
(87) Internationale Veröffentlichungsnummer: WO 2018/010798

(56) Entgegenhaltungen:
- EP-A2- 0 414 086
- WO-A2-2010/104853
- US-A1- 2016 160 980

## Beschreibung

Die vorliegende Erfindung betrifft ein sperrbares Differentialgetriebe zur Übertragung eines Drehmoments auf eine Achse eines Kraftfahrzeuges, mit mindestens einer Antriebswelle und mindestens einer Abtriebswelle, die über eine Kupplung innerhalb eines Gehäuses des Differentialgetriebes drehmomentübertragend verbindbar sind.

Über das Differentialgetriebe wird üblicherweise ein Drehmoment von einer Antriebseinheit über eine Eingangswelle (z. B. über eine Längswelle) in das Differentialgetriebe übertragen. Innerhalb des Differentialgetriebes wird dieses Drehmoment auf die Räder der Achse übertragen, wobei einerseits unterschiedliche Drehzahlen der Räder in dem Differentialgetriebe ausgeglichen werden können und andererseits eine, ggf. unterschiedliche, Aufteilung des Drehmoments hin zu den Rädern erfolgen soll.

Die Eingangswelle überträgt das Drehmoment über die mindestens eine Antriebswelle auf die Abtriebswelle und damit auf das jeweilige Rad der Achse. Über die Kupplung kann die jeweilige Abtriebswelle mit der Antriebswelle und damit mit der Eingangswelle gekoppelt werden. Die Kupplung wird über eine Betätigungsvorrichtung betätigt. Bei gesperrtem Differentialgetriebe wird zumindest eine Antriebswelle mit der entsprechenden Abtriebswelle starr verbunden.

Aus der EP 0 414 086 A2 ist ein solches Differentialgetriebe bekannt. Dort wird vorgeschlagen, die zur Betätigung der Kupplung erforderliche Betätigungskraft an einer Welle bzw. an dem Differentialkorb abzustützen, so dass das Getriebegehäuse des Differentialgetriebes belastungsfrei bleibt. So können Einflüsse auf Verzahnungsverhältnisse und auf die Lagerbelastung reduziert werden.

Es besteht ein ständiges Bedürfnis, Komponenten von Kraftfahrzeugen zu verbessern. Insbesondere sollen die Komponenten leichter und kompakter werden und dabei möglichst kostengünstiger in der Herstellung.

Hiervon ausgehend ist es Aufgabe der vorliegenden Erfindung, die mit Bezug auf den Stand der Technik geschilderten Probleme zumindest zu lindern oder gar zu lösen. Insbesondere soll ein Differentialgetriebe vorgeschlagen werden, dessen Gewicht und Baugröße weiter reduziert sind und/oder das einfacher aufgebaut ist.

Zur Lösung dieser Aufgaben trägt ein Differentialgetriebe gemäß den Merkmalen des unabhängigen Patentanspruchs bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Es wird ein (sperrbares) Differentialgetriebe zur Übertragung eines Drehmoments auf eine Achse eines Kraftfahrzeuges vorgeschlagen, mit mindestens einer Antriebswelle und mindestens einer Abtriebswelle, die über eine Kupplung innerhalb eines Gehäuses des Differentialgetriebes drehmomentübertragend verbindbar sind. Die Kupplung ist über eine Betätigungsvorrichtung betätigbar, wobei die Betätigungsvorrichtung an dem Gehäuse gelagert ist. Die mindestens eine Abtriebswelle ist über ein Lager, z. B. ein Wälzlager, drehbar gelagert, wobei das Lager an der Betätigungsvorrichtung gelagert ist. Ein Anschlag ist an der mindestens einen Abtriebswelle so angeordnet, dass eine zur Betätigung der Kupplung vorgesehene und zumindest in einer axialen Richtung wirkende Betätigungskraft sich zumindest über die Betätigungsvorrichtung und das Lager an dem Anschlag abstützt.

Insbesondere sind Antriebswellen, Abtriebswellen, Kupplungen, Lager und Anschlag (vollständig) innerhalb des Gehäuses des Differentialgetriebes angeordnet. Gegebenenfalls erstrecken sich (nur) die Abtriebswellen über Öffnungen in dem Gehäuse nach außen.

Bevorzugt ist das Gehäuse mehrteilig ausgeführt und bildet einen Innenraum für die oben angeführten Komponenten, in dem eine ausreichende Schmierung der Komponenten gewährleistet werden kann. Das Gehäuse ist also bevorzugt durch Dichtungen nach außen abgedichtet, so dass ein Schmiermittel innerhalb des Gehäuses verbleibt.

Der hier verwendete Begriff Gehäuse betrifft in jedem Fall zumindest den Teil des (ggf. mehrteilig ausgeführten) Gehäuses, an dem die Betätigungsvorrichtung gelagert ist.

Aus der EP 0 414 086 A2 ist eine Betätigungsvorrichtung mit zwei Spreizscheiben bekannt, die sich über Kugeln in der axialen Richtung abstützen. Eine Verdrehung der Spreizscheiben gegeneinander in der Umfangsrichtung führt zu einer Veränderung der Lage einer Spreizscheibe in der axialen Richtung, da die Kugeln auf Rampen angeordnet sind. Die Spreizscheiben sind beide auf der Welle angeordnet, wobei die Betätigungskräfte auf der einen Seite durch eine auf der Welle axial gesicherte Scheibe und auf der anderen Seite durch den Differentialkorb aufgenommen werden. Die Welle ist über ein Wälzlager an dem Getriebegehäuse gelagert.

Hier wird nun vorgeschlagen, dass das Lager an der Betätigungsvorrichtung (und nicht am Gehäuse) gelagert ist. Weiter ist die Betätigungsvorrichtung an dem Gehäuse (und nicht auf der Abtriebswelle) gelagert. Bevorzugt ist es so möglich, Lager und Betätigungsvorrichtung in der axialen Richtung zumindest überlappend und ggf. zusätzlich koaxial anzuordnen. Insbesondere ist also das Lager z. B. in einer radialen Richtung innerhalb der Betätigungsvorrichtung angeordnet. Damit ist eine kompaktere Bauform des Differentialgetriebes möglich.

Insbesondere stützt sich das Lager an der Betätigungsvorrichtung ab. Bevorzugt ist das Lager unmittelbar benachbart zur Betätigungsvorrichtung angeordnet. Insbesondere werden (z. B. im Betrieb des Differentialgetriebes von den Abtriebswellen ausgehende) Kräfte in der radialen Richtung nur von dem Lager auf die Betätigungsvorrichtung übertragen. Insbesondere werden Betätigungskräfte in der axialen Richtung von der Betätigungsvorrichtung hauptsächlich oder ausschließlich auf das Lager übertragen.

Die Betätigungsvorrichtung ist an dem Gehäuse angeordnet. Die zur Betätigung der Kupplung erforderlichen Betätigungskräfte werden aber nur zu einem geringen Teil, bevorzugt gar nicht, durch das Gehäuse aufgenommen. Insbesondere wird in das Gehäuse höchstens 20 % der maximalen Betätigungskraft eingeleitet. Bevorzugt stützt sich die Betätigungskraft belastungsfrei für das Gehäuse über das Lager an dem Anschlag ab.

Insbesondere erfolgt über das Gehäuse nur eine Positionierung der Betätigungsvorrichtung in der radialen Richtung, wobei in der axialen Richtung ein Spiel zwischen Gehäuse und Betätigungsvorrichtung vorliegt.

Die Betätigungskräfte werden, ausgehend von der Betätigungsvorrichtung, einerseits in die Kupplung und andererseits über das Lager und den Anschlag in die Abtriebswelle eingeleitet.

Eine Verformung des Gehäuses infolge der Betätigungskräfte kann somit verhindert werden. Damit können aber enge Toleranzen innerhalb des Differentialgetriebes auch im Betrieb und über Laufzeit gewährleistet werden, so dass eine stets genaue Ansteuerung der Kupplung und damit eine genaue Einstellung der zu übertragenden Drehmomente erfolgen kann.

Bevorzugt besteht das Gehäuse aus einem nichtmetallischen Werkstoff, insbesondere aus einem Kunststoff. Alternativ ist es möglich einen metallischen Werkstoff zu verwenden, wobei das Gehäuse aber dünnwandiger ausführbar ist. Beide Maßnahmen ermöglichen eine deutliche Gewichtsersparnis des Gehäuses.

Gemäß einer bevorzugten Ausgestaltung ist das Lager ein Wälzlager und umfasst einen Innenring und einen Außenring (sowie dazwischen angeordnete Wälzkörper, z. B. Kugeln), wobei der Innenring auf der mindestens einen Abtriebswelle und an dem Anschlag und der Außenring an der Betätigungsvorrichtung angeordnet ist.

Insbesondere werden die Betätigungskräfte also ausgehend von der Betätigungsvorrichtung über den Außenring auf die Wälzkörper, von den Wälzkörpern auf den Innenring und von dem Innenring hin zum Anschlag geleitet.

Bevorzugt ist der Anschlag durch einen Stützring gebildet, der, z. B. in einer Nut, auf der Abtriebswelle in der axialen Richtung formschlüssig angeordnet ist. Der Stützring ist z. B. ein Federring, der im gespreizten Zustand auf die Abtriebswelle aufschiebbar und so z. B. in einer (ggf. umlaufenden) Nut anordenbar ist.

Insbesondere umfasst die Betätigungsvorrichtung zwei gegeneinander in einer Umfangsrichtung verdrehbare Spreizscheiben, wobei zumindest eine erste Spreizscheibe an dem Gehäuse gelagert ist und zumindest teilweise aus einem metallischen Werkstoff besteht.

Insbesondere wird die erste Spreizscheibe über das Gehäuse nur in der radialen Richtung positioniert, wobei in der axialen Richtung ein Spiel zwischen Gehäuse und erster Spreizscheibe vorliegt.

Erste Spreizscheibe und Lager sind bevorzugt so miteinander verbunden, dass eine zumindest in der axialen Richtung wirkende Betätigungskraft von der Spreizscheibe in das Lager einleitbar ist.

Gemäß einer anderen Ausgestaltung wird vorgeschlagen, dass die Betätigungsvorrichtung zur Betätigung der Kupplung mindestens einen, in mindestens einem Zylinder in der axialen Richtung verschiebbaren Kolben aufweist, wobei der mindestens eine Zylinder an dem Gehäuse gelagert ist und zumindest teilweise aus einem metallischen Werkstoff besteht.

Die Leitung der Betätigungskraft durch die Betätigungsvorrichtung erfolgt bevorzugt zum größten Anteil (insbesondere ausschließlich) durch die metallischen Komponenten der Betätigungsvorrichtung.

Insbesondere ist die Kupplung eine Lamellenkupplung mit einer Mehrzahl von äußeren Lamellen und einer Mehrzahl von inneren Lamellen. Die Kupplung kann aber auch als Reibkupplung mit einer Anpressplatte, einer Kupplungsscheibe und einer Gegenplatte ausgeführt sein, wobei Anpressplatte und Gegenplatte z. B. mit der Abtriebswelle und die Kupplungsscheibe mit der Antriebswelle drehfest verbunden sind. Die Anpressplatte ist dabei entlang der axialen Richtung verschiebbar angeordnet, wobei die Kupplungsscheibe zwischen Anpressplatte und Gegenplatte angeordnet ist. Die Kupplung ist damit nicht auf eine besondere Ausführungsform festgelegt. Allerdings sollte bevorzugt auch eine teilweise Übertragung eines Drehmoments von der Antriebswelle auf die Abtriebswelle über die Kupplung ermöglicht werden.

Insbesondere weist das Differentialgetriebe zwei Abtriebswellen auf, die über jeweils eine Kupplung mit der mindestens einen Antriebswelle drehmomentübertragend verbindbar sind. Insbesondere wird ein Drehmoment über eine Eingangswelle in das Differentialgetriebe eingeleitet. Über eine Verzahnung wird das Drehmoment von der Eingangswelle auf eine Antriebswelle übertragen, die an einander gegenüberliegenden Enden über jeweils eine Kupplung mit einer Abtriebswelle verbindbar ist. Über diese zwei Kupplungen kann so eine unterschiedliche Drehzahl der Abtriebswellen ermöglicht und weiterhin eine gewünschte Verteilung des Drehmoments auf die Abtriebswellen eingestellt werden.

Gemäß einer anderen Ausgestaltung weist das Differentialgetriebe zwei Abtriebswellen auf, wobei nur eine Abtriebswelle über eine Kupplung mit der mindestens einen Antriebswelle drehmomentübertragend verbindbar ist. In diesem Fall weist das Differentialgetriebe also nur eine Kupplung auf, wobei die zwei Abtriebswellen zum Ausgleich ggf. unterschiedlicher Drehzahlen über ein Differential, z. B. über ein Kegelrad-Differentialgetriebe oder ein Umlaufräder-Differentialgetriebe, miteinander gekoppelt sind. Im Falle des Kegelrad-Differentialgetriebes bildet z. B. der Differentialkorb eine erste Antriebswelle, die mit der Eingangswelle z. B. über eine Verzahnung unmittelbar verbunden ist.

Es wird weiter eine Antriebsanordnung für ein Kraftfahrzeug vorgeschlagen, zumindest umfassend eine Antriebseinheit und ein erfindungsgemäßes Differentialgetriebe, wobei das Differentialgetriebe zur Übertragung eines Drehmoments von der Antriebseinheit auf zwei Räder einer Achse vorgesehen ist, wobei das Drehmoment über eine Eingangswelle in das Differentialgetriebe einleitbar ist und die mindestens eine Antriebswelle mit der Eingangswelle unmittelbar über eine Verzahnung oder über ein Differential drehmomentübertragend verbunden ist.

Gemäß einer bevorzugten Ausgestaltung ist z. B. eine erste Antriebswelle als Differentialkorb des Differentials ausgeführt.

Die Ausführungen zu dem Differentialgetriebe gelten gleichermaßen für die Antriebsanordnung und umgekehrt.

Weiter wird ein Kraftfahrzeug vorgeschlagen, das zumindest eine vorstehend angegebene Antriebsanordnung sowie mehrere Räder aufweist, wobei das Differentialgetriebe bevorzugt an einer Hinterachse des Kraftfahrzeuges angeordnet ist.

Die Erfindung, sowie das technische Umfeld werden nachfolgend anhand der Figuren näher erläutert. Gleiche Bezugszeichen bezeichnen gleiche Gegenstände, so dass ggf. Erläuterungen aus anderen Figuren ergänzend herangezogen werden können. Es zeigen schematisch:
- Fig. 1:: Differentialgetriebe mit einer Kupplung in einer Seitenansicht im Schnitt, die Figur zeigt nicht die Erfindung;
- Fig. 2:: Differentialgetriebe mit zwei Kupplungen in einer Seitenansicht im Schnitt, die Figur zeigt nicht die Erfindung;
- Fig. 3:: ein Detail einer ersten Ausführungsvariante eines Differentialgetriebes in einer Seitenansicht im Schnitt;
- Fig. 4:: ein Detail einer zweiten Ausführungsvariante eines Differentialgetriebes in einer Seitenansicht im Schnitt; und
- Fig. 5:: ein Kraftfahrzeug mit einer Antriebsanordnung in einer Draufsicht.

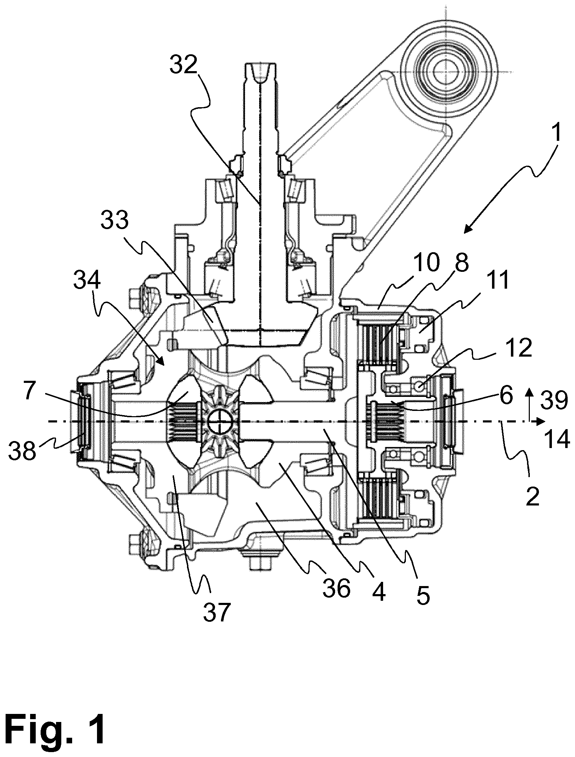

Fig. 1 zeigt ein Differentialgetriebe 1 mit einer Kupplung 8 in einer Seitenansicht im Schnitt. Hier weist das Differentialgetriebe 1 eine erste Abtriebswelle 6 und eine zweite Abtriebswelle 7 auf, wobei nur die erste Abtriebswelle 6 über eine (erste) Kupplung 8 mit der (zweiten) Antriebswelle 5 drehmomentübertragend verbindbar ist. In diesem Fall weist das Differentialgetriebe 1 also nur eine Kupplung 8 auf, wobei die zwei Abtriebswellen 6, 7 zum Ausgleich ggf. unterschiedlicher Drehzahlen über ein Differential 34, hier über ein Kegelrad-Differentialgetriebe, miteinander gekoppelt sind, wobei der Differentialkorb 37 die erste Antriebswelle 4 bildet, die mit der Eingangswelle 32 über eine Verzahnung 33 unmittelbar verbunden ist.

Die Kupplung 8 wird über eine Betätigungsvorrichtung 11 betätigt, die an dem Gehäuse 10 des Differentialgetriebes 1 angeordnet und dort gelagert ist. Betätigungskräfte 15 (hier nicht gezeigt) der Betätigungsvorrichtung 11 werden direkt von der Betätigungsvorrichtung 11 in das Gehäuse 10 eingeleitet.

Hier ist das Gehäuse 10 mehrteilig ausgeführt und bildet einen Innenraum 36 für die folgenden Komponenten: erste Antriebswelle 4, zweite Antriebswelle 5, Abtriebswellen 6, 7, Kupplung 8, Lager 12 sowie Betätigungsvorrichtung 11, die also innerhalb des Gehäuses 10 angeordnet sind. Die Abtriebswellen 6, 7 sind hier jeweils als Hohlwellen mit einer nach innen weisenden Keilverzahnung ausgeführt. Über die Keilverzahnungen werden weitere Abtriebswellen drehfest mit den Abtriebswellen 6, 7 verbunden, wobei sich die weiteren Abtriebswellen dann über die Öffnungen 38 in dem Gehäuse 10 nach außen erstrecken (hier nicht gezeigt).

Das Gehäuse 10 ist durch Dichtungen nach außen abgedichtet, so dass ein Schmiermittel innerhalb des Gehäuses 10 zurückgehalten und so eine ausreichende Schmierung der Komponenten in dem Innenraum 36 gewährleistet wird.

Die Kupplung 8 ist hier als eine Lamellenkupplung mit einer Mehrzahl von äußeren Lamellen 27 und einer Mehrzahl von inneren Lamellen 28 ausgeführt, die über die Betätigungsvorrichtung 11 reibschlüssig miteinander verbindbar sind.

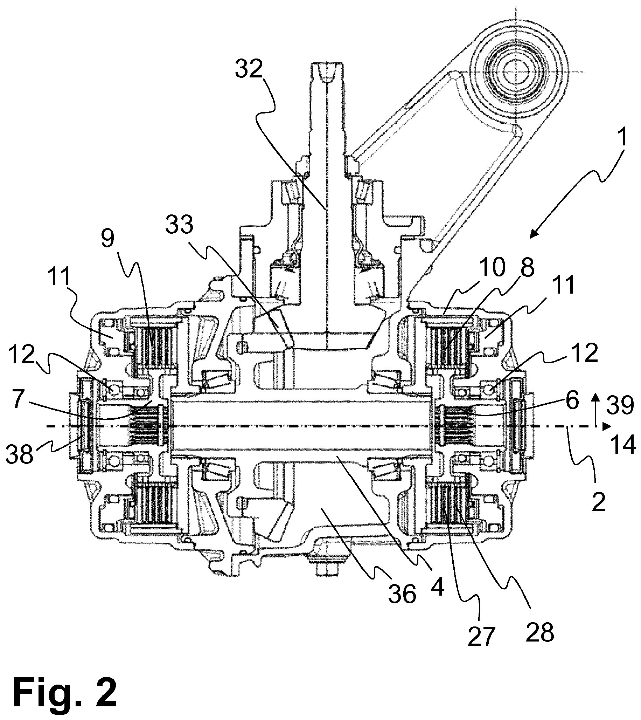

Fig. 2 zeigt ein Differentialgetriebe 1 mit zwei Kupplungen 8, 9 in einer Seitenansicht im Schnitt. Hier weist das Differentialgetriebe 1 eine erste Abtriebswelle 6 und eine zweite Abtriebswelle 7 auf, die über jeweils eine Kupplung 8, 9 mit der einen ersten Antriebswelle 4 drehmomentübertragend verbindbar sind. Ein Drehmoment wird über die Eingangswelle 32 in das Differentialgetriebe 1 eingeleitet und über eine Verzahnung 33 von der Eingangswelle 32 auf die erste Antriebswelle 4 übertragen. Die erste Antriebswelle 4 ist an einander gegenüberliegenden Enden über jeweils eine Kupplung 8, 9 mit einer Abtriebswelle 6, 7 verbindbar. Über diese zwei Kupplungen 8, 9 kann eine unterschiedliche Drehzahl der Abtriebswellen 6, 7 ermöglicht und weiterhin eine gewünschte Verteilung des Drehmoments auf die Abtriebswellen 6, 7 eingestellt werden.

Die Kupplungen 8, 9 werden über Betätigungsvorrichtungen 11 betätigt, die an dem Gehäuse 10 des Differentialgetriebes 1 angeordnet und dort gelagert sind. Betätigungskräfte 15 (hier nicht gezeigt) der Betätigungsvorrichtungen 11 werden direkt von der jeweiligen Betätigungsvorrichtung 11 in das Gehäuse 10 eingeleitet.

Die Kupplungen 8, 9 sind als Lamellenkupplungen mit einer Mehrzahl von äußeren Lamellen 27 und einer Mehrzahl von inneren Lamellen 28 ausgeführt. Die äußeren Lamellen 27 sind über einen äußeren Lamellenträger mit der ersten Antriebswelle 4 drehfest verbunden. Die inneren Lamellen 28 der ersten Kupplung 8 sind über einen inneren Lamellenträger mit der ersten Abtriebswelle 6 und die inneren Lamellen 28 der zweiten Kupplung 8 über einen inneren Lamellenträger mit der zweiten Abtriebswelle 7 verbunden.

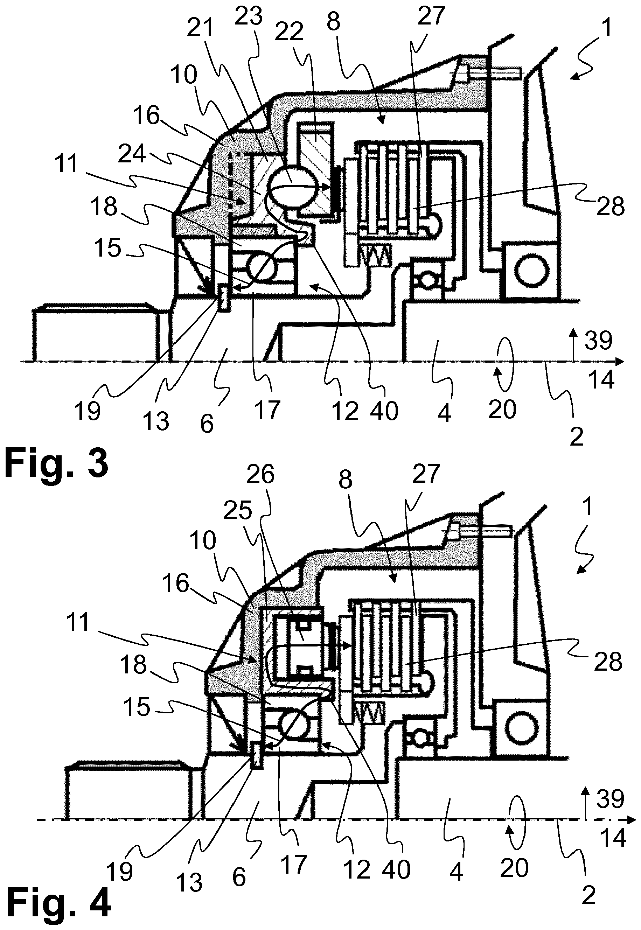

Es wird auf die Ausführungen zu Fig. 3 Bezug genommen.

Fig. 3 zeigt ein Detail einer ersten Ausführungsvariante eines Differentialgetriebes 1 in einer Seitenansicht im Schnitt. Mit dem Differentialgetriebe 1 wird ein Drehmoment von einer Eingangswelle 32 auf eine Achse 2 eines Kraftfahrzeuges 3 übertragen. Das Differentialgetriebe 1 umfasst hier eine erste Antriebswelle 4 und eine erste Abtriebswelle 6, die über eine erste Kupplung 8 innerhalb des Gehäuses 10 des Differentialgetriebes 1 drehmomentübertragend verbindbar sind. Die erste Kupplung 8 ist über eine Betätigungsvorrichtung 11 betätigbar, wobei die Betätigungsvorrichtung 11 an dem Gehäuse 10 gelagert ist. Die erste Abtriebswelle 6 ist über ein Lager 12 drehbar gelagert, wobei das Lager 12 an der Betätigungsvorrichtung 11 gelagert ist. Ein Anschlag 13 ist an der ersten Abtriebswelle 6 so angeordnet, dass eine zur Betätigung der ersten Kupplung 8 vorgesehene und zumindest in der axialen Richtung 14 wirkende Betätigungskraft 15 sich zumindest über die Betätigungsvorrichtung 11 und das Lager 12 an dem Anschlag 13 abstützt.

Hier umfasst die Betätigungsvorrichtung 11 eine erste Spreizscheibe 21 und eine zweite Spreizscheibe 22, die sich über Kugeln (Rollkörper 23) in der axialen Richtung 14 abstützen. Eine Verdrehung der Spreizscheiben 21, 22 gegeneinander in der Umfangsrichtung 20 führt zu einer Veränderung der Lage der zweiten Spreizscheibe 22 in der axialen Richtung 14, da die Kugeln (Rollkörper 23) auf Rampen angeordnet sind.

Hier ist das Lager 12 an der Betätigungsvorrichtung 11 (und nicht am Gehäuse 10) gelagert. Weiter ist die Betätigungsvorrichtung 11 an dem Gehäuse 10 (und nicht auf der ersten Abtriebswelle 6) gelagert. Somit ist es möglich, Lager 12 und Betätigungsvorrichtung 11 in der axialen Richtung 14 zumindest überlappend anzuordnen. Hier ist also das Lager 12 in einer radialen Richtung 39 innerhalb der Betätigungsvorrichtung 11 und koaxial zu der Betätigungsvorrichtung 11 angeordnet. Damit ist eine kompaktere Bauform des Differentialgetriebes 1 möglich.

Die Betätigungsvorrichtung 11 ist an dem Gehäuse 10 angeordnet. Die zur Betätigung der ersten Kupplung 8 erforderlichen Betätigungskräfte 15 werden nur zu einem geringen Teil, bevorzugt gar nicht, durch das Gehäuse 10 aufgenommen.

Hier erfolgt über das Gehäuse 10 nur eine Positionierung der Betätigungsvorrichtung 11 in der radialen Richtung 39, wobei in der axialen Richtung 14 ein Spiel zwischen Gehäuse 10 und Betätigungsvorrichtung 11 vorliegt.

Die Betätigungskräfte 15 werden, ausgehend von der Betätigungsvorrichtung 11, einerseits in die erste Kupplung 8 (und über die erste Kupplung 8 in die erste Antriebswelle 4) und andererseits über das Lager 12 und den Anschlag 13 in die erste Abtriebswelle 6 eingeleitet.

Eine Verformung des Gehäuses 10 infolge der Betätigungskräfte 15 kann somit verhindert werden. Damit können aber enge Toleranzen innerhalb des Differentialgetriebes 1 auch im Betrieb und über Laufzeit gewährleistet werden, so dass eine stets genaue Ansteuerung der Kupplung 8 und damit eine genaue Einstellung der zu übertragenden Drehmomente erfolgen kann.

Hier besteht das Gehäuse 10 aus einem nichtmetallischen Werkstoff 16, insbesondere aus einem Kunststoff.

Hier ist das Lager 12 ein Wälzlager und umfasst einen Innenring 17 und einen Außenring 18 (sowie dazwischen angeordnete Wälzkörper, z. B. Kugeln), wobei der Innenring 17 auf der ersten Abtriebswelle 6 und an dem Anschlag 13 und der Außenring 18 an der Betätigungsvorrichtung 11 angeordnet ist.

Die Betätigungskräfte 15 werden nun ausgehend von der Betätigungsvorrichtung 11 über den Außenring 18 auf die Wälzkörper, von den Wälzkörpern auf den Innenring 17 und von dem Innenring 17 hin zum Anschlag 13 geleitet.

Der Anschlag 13 ist hier durch einen Stützring 19 gebildet, der in einer Nut auf der ersten Abtriebswelle 6 in der axialen Richtung 14 formschlüssig angeordnet ist.

Hier umfasst die Betätigungsvorrichtung 11 zwei gegeneinander in einer Umfangsrichtung 20 verdrehbare Spreizscheiben 21, 22, wobei die erste Spreizscheibe 21 an dem Gehäuse 10 gelagert ist und zumindest teilweise aus einem metallischen Werkstoff 24 (z. B. umfassend eine metallische Legierung oder sintertechnisch u. a. aus einem metallischen Pulver hergestellt) besteht.

Die erste Spreizscheibe 21 und das Lager 12 sind so miteinander verbunden, dass die zumindest in der axialen Richtung 14 wirkende Betätigungskraft 15 von der ersten Spreizscheibe 21 in das Lager 12 einleitbar ist. Die Einleitung erfolgt hier über den Umgriff 40 der ersten Spreizscheibe 21 über den Außenring 18 des Lagers 12.

Die Leitung der Betätigungskraft 15 durch die Betätigungsvorrichtung 11 erfolgt hier ausschließlich durch die Komponenten der Betätigungsvorrichtung 11 (nämlich der ersten Spreizscheibe 21) aus metallischem Werkstoff 24.

Hier ist die erste Kupplung 8 eine Lamellenkupplung mit einer Mehrzahl von äußeren Lamellen 27 und einer Mehrzahl von inneren Lamellen 28, die bei Betätigung der Kupplung 8 reibschlüssig miteinander verbindbar und wieder lösbar sind.

Fig. 4 zeigt ein Detail einer zweiten Ausführungsvariante eines Differentialgetriebes 1 in einer Seitenansicht im Schnitt. Auf die Ausführungen zu Fig. 3 wird Bezug genommen. Im Unterschied zur ersten Ausführungsvariante ist die Betätigungsvorrichtung 11 zur Betätigung der ersten Kupplung 8 hier mit einem, in einem Zylinder 25 in der axialen Richtung 14 verschiebbaren Kolben 26 ausgeführt, wobei der Zylinder 25 an dem Gehäuse 10 gelagert ist und zumindest teilweise aus einem metallischen Werkstoff 24 besteht. Hier bildet der Zylinder 25 den Umgriff 40.

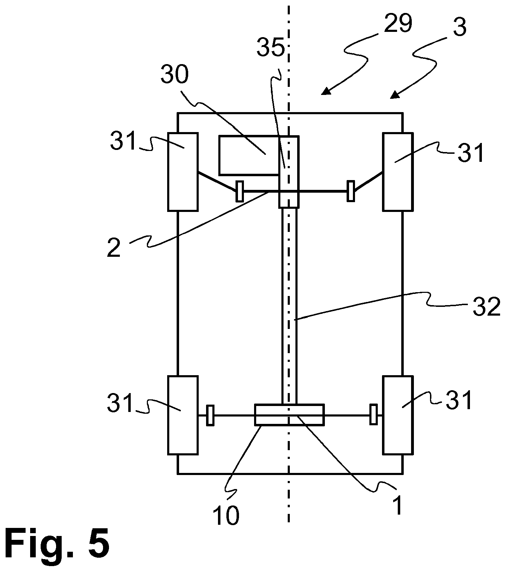

Fig. 5 zeigt ein Kraftfahrzeug 3 mit einer Antriebsanordnung 29 in einer Draufsicht. Die Antriebsanordnung 29 umfasst eine Antriebseinheit 30, ein Getriebe 35 sowie eine als Längswelle ausgeführte Eingangswelle 32 für das Differentialgetriebe 1. Das Differentialgetriebe 1 ist zur Übertragung eines Drehmoments von der Antriebseinheit 30 auf die zwei Räder 31 einer Achse 2 vorgesehen, wobei das Drehmoment über die Eingangswelle 32 in das Differentialgetriebe 1 einleitbar ist. Das Kraftfahrzeug 3 umfasst zumindest die Antriebsanordnung 29 sowie mehrere Räder 31, wobei das Differentialgetriebe 1 bevorzugt an einer (Hinter-)Achse 2 des Kraftfahrzeuges 3 angeordnet ist.

### Bezugszeichenliste

- 1: Differentialgetriebe
- 2: Achse
- 3: Kraftfahrzeug
- 4: erste Antriebswelle
- 5: zweite Antriebswelle
- 6: erste Abtriebswelle
- 7: zweite Abtriebswelle
- 8: erste Kupplung
- 9: zweite Kupplung
- 10: Gehäuse
- 11: Betätigungsvorrichtung
- 12: Lager
- 13: Anschlag
- 14: axiale Richtung
- 15: Betätigungskraft
- 16: nichtmetallischer Werkstoff
- 17: Innenring
- 18: Außenring
- 19: Stützring
- 20: Umfangsrichtung
- 21: erste Spreizscheibe
- 22: zweite Spreizscheibe
- 23: Rollkörper
- 24: metallischer Werkstoff
- 25: Zylinder
- 26: Kolben
- 27: äußere Lamellen
- 28: innere Lamellen
- 29: Antriebsanordnung
- 30: Antriebseinheit
- 31: Rad
- 32: Eingangswelle
- 33: Verzahnung
- 34: Differential
- 35: Getriebe
- 36: Innenraum
- 37: Differentialkorb
- 38: Öffnung
- 39: radiale Richtung
- 40: Umgriff

## Patentansprüche

1. Differentialgetriebe (1) zur Übertragung eines Drehmoments auf eine Achse (2) eines Kraftfahrzeuges (3), mit mindestens einer Antriebswelle (4, 5) und mindestens einer Abtriebswelle (6, 7), die über eine Kupplung (8, 9) innerhalb eines Gehäuses (10) des Differentialgetriebes (1) drehmomentübertragend verbindbar sind, wobei die Kupplung (8, 9) über eine Betätigungsvorrichtung (11) betätigbar ist, wobei die Betätigungsvorrichtung (11) an dem Gehäuse (10) gelagert ist, wobei die mindestens eine Abtriebswelle (6, 7) über ein Lager (12) drehbar gelagert ist, **dadurch gekennzeichnet, dass** das Lager (12) an der Betätigungsvorrichtung (11) gelagert ist; wobei ein Anschlag (13) an der mindestens einen Abtriebswelle (6, 7) so angeordnet ist, dass eine zur Betätigung der Kupplung (8, 9) vorgesehene und zumindest in einer axialen Richtung (14) wirkende Betätigungskraft (15) sich zumindest über die Betätigungsvorrichtung (11) und das Lager (12) an dem Anschlag (13) abstützt.

2. Differentialgetriebe (1) nach Patentanspruch 1, wobei das Gehäuse (10) aus einem nichtmetallischen Werkstoff (16) besteht.

3. Differentialgetriebe (1) nach einem der vorhergehenden Patentansprüche, wobei sich die Betätigungskraft (15) belastungsfrei für das Gehäuse (10) an dem Anschlag (13) abstützt.

4. Differentialgetriebe (1) nach einem der vorhergehenden Patentansprüche, wobei das Lager (12) ein Wälzlager ist und einen Innenring (17) und einen Außenring (18) umfasst, wobei der Innenring (17) auf der mindestens einen Abtriebswelle (6, 7) und an dem Anschlag (13) angeordnet ist und der Außenring (18) an der Betätigungsvorrichtung (11) angeordnet ist.

5. Differentialgetriebe (1) nach einem der vorhergehenden Patentansprüche, wobei der Anschlag (13) durch einen Stützring (19) gebildet ist, der auf der mindestens einen Abtriebswelle (6, 7) in der axialen Richtung (14) formschlüssig angeordnet ist.

6. Differentialgetriebe (1) nach einem der vorhergehenden Patentansprüche, wobei die Betätigungsvorrichtung (11) zwei gegeneinander in einer Umfangsrichtung (20) verdrehbare Spreizscheiben (21, 22) umfasst, wobei zumindest eine erste Spreizscheibe (21) an dem Gehäuse (10) gelagert ist und zumindest teilweise aus einem metallischen Werkstoff (24) besteht.

7. Differentialgetriebe (1) nach einem der vorhergehenden Patentansprüche 1 bis 5, wobei die Betätigungsvorrichtung (11) zur Betätigung der Kupplung (8, 9) mindestens einen, in mindestens einem Zylinder (25) in der axialen Richtung (14) verschiebbaren Kolben (26) aufweist, wobei der mindestens eine Zylinder (25) an dem Gehäuse (10) gelagert ist und zumindest teilweise aus einem metallischen Werkstoff (24) besteht.

8. Differentialgetriebe (1) nach einem der vorhergehenden Patentansprüche, wobei die Kupplung (8, 9) eine Lamellenkupplung mit äußeren Lamellen (27) und inneren Lamellen (28) ist.

9. Differentialgetriebe (1) nach einem der vorhergehenden Patentansprüche, wobei das Differentialgetriebe (1) zwei Abtriebswellen (6, 7) aufweist, die über jeweils eine Kupplung (8, 9) mit der mindestens einen Antriebswelle (4, 5) drehmomentübertragend verbindbar sind, wobei jede Kupplung (8, 9) über jeweils eine Betätigungsvorrichtung (11) betätigbar ist, wobei die Betätigungsvorrichtungen (11) an dem Gehäuse (10) gelagert sind, wobei jede Abtriebswelle (6, 7) über jeweils ein Lager (12) drehbar gelagert ist, wobei jedes Lager (12) an der jeweiligen Betätigungsvorrichtung (11) gelagert ist; wobei jeweils ein Anschlag (13) an jeder Abtriebswelle (6, 7) so angeordnet ist, dass eine zur Betätigung der Kupplung (8, 9) vorgesehene und zumindest in einer axialen Richtung (14) wirkende Betätigungskraft (15) sich zumindest über die Betätigungsvorrichtung (11) und das Lager (12) an dem Anschlag (13) abstützt.

10. Differentialgetriebe (1) nach einem der vorhergehenden Patentansprüche 1 bis 8, wobei das Differentialgetriebe (1) zwei Abtriebswellen (6, 7) aufweist, wobei nur eine Abtriebswelle (6, 7) über eine Kupplung (8, 9) mit der mindestens einen Antriebswelle (4, 5) drehmomentübertragend verbindbar ist.

11. Antriebsanordnung (29) für ein Kraftfahrzeug (3), zumindest umfassend eine Antriebseinheit (30) und ein Differentialgetriebe (1) nach einem der vorhergehenden Patentansprüche, wobei das Differentialgetriebe (1) zur Übertragung eines Drehmoments von der Antriebseinheit (30) auf zwei Räder (31) einer Achse (2) vorgesehen ist, wobei das Drehmoment über eine Eingangswelle (32) in das Differentialgetriebe (1) einleitbar ist und die mindestens eine Antriebswelle (4, 5) mit der Eingangswelle (32) unmittelbar über eine Verzahnung (33) oder über ein Differential (34) drehmomentübertragend verbunden ist.

## Claims

1. Differential transmission (1) for transmitting a torque to an axle (2) of a motor vehicle (3), having at least one driveshaft (4, 5) and at least one output shaft (6, 7), which are connectable in torque-transmitting manner via a clutch (8, 9) within a housing (10) of the differential transmission (1), wherein the clutch (8, 9) is actuable via an actuating device (11), wherein the actuating device (11) is mounted on the housing (10), wherein the at least one output shaft (6, 7) is mounted in a rotatable manner via a bearing (12), **characterized in that** the bearing (12) is mounted on the actuating device (11); wherein a stop (13) is arranged on the at least one output shaft (6, 7) such that an actuating force (15) that is provided for actuating the clutch (8, 9) and acts at least in an axial direction (14) is supported on the stop (13) at least via the actuating device (11) and the bearing (12).

2. Differential transmission (1) as claimed in claim 1, wherein the housing (10) consists of a nonmetal material (16).

3. Differential transmission (1) as claimed in either of the preceding claims, wherein the actuating force (15) is supported on the stop (13) such that the housing (10) is free of load.

4. Differential transmission (1) as claimed in one of the preceding claims, wherein the bearing (12) is a rolling bearing and comprises an inner ring (17) and an outer ring (18), wherein the inner ring (17) is arranged on the at least one output shaft (6, 7) and on the stop (13), and the outer ring (18) is arranged on the actuating device (11).

5. Differential transmission (1) as claimed in one of the preceding claims, wherein the stop (13) is formed by a supporting ring (19) which is arranged on the at least one output shaft (6, 7) in a form-fitting manner in the axial direction (14).

6. Differential transmission (1) as claimed in one of the preceding claims, wherein the actuating device (11) comprises two expansion disks (21, 22) that are twistable in a circumferential direction (20) with respect to one another, wherein at least a first expansion disk (21) is mounted on the housing (10) and consists at least partially of a metal material (24).

7. Differential transmission (1) as claimed in one of the preceding claims 1 to 5, wherein, in order to actuate the clutch (8, 9), the actuating device (11) has at least one piston (26) that is displaceable in the axial direction (14) in at least one cylinder (25), wherein the at least one cylinder (25) is mounted on the housing (10) and consists at least partially of a metal material (24).

8. Differential transmission (1) as claimed in one of the preceding claims, wherein the clutch (8, 9) is a multiplate clutch having outer plates (27) and inner plates (28).

9. Differential transmission (1) as claimed in one of the preceding claims, wherein the differential transmission (1) has two output shafts (6, 7), which are connectable to the at least one driveshaft (4, 5) in a torque-transmitting manner via a respective clutch (8, 9), wherein each clutch (8, 9) is actuable via a respective actuating device (11), wherein the actuating devices (11) are mounted on the housing (10), wherein each output shaft (6, 7) is mounted in a rotatable manner via a respective bearing (12), wherein each bearing (12) is mounted on the respective actuating device (11); wherein a respective stop (13) is arranged on each output shaft (6, 7) such that an actuating force (15) that is provided for actuating the clutch (8, 9) and acts at least in an axial direction (14) is supported on the stop (13) at least via the actuating device (11) and the bearing (12).

10. Differential transmission (1) as claimed in one of the preceding claims 1 to 8, wherein the differential transmission (1) has two output shafts (6, 7), wherein only one output shaft (6, 7) is connectable to the at least one driveshaft (4, 5) in a torque-transmitting manner via a clutch (8, 9).

11. Drive arrangement (29) for a motor vehicle (3), at least comprising a drive unit (30) and a differential transmission (1) as claimed in one of the preceding claims, wherein the differential transmission (1) is provided to transmit a torque from the drive unit (30) to two wheels (31) of an axle (2), wherein the torque is introducible into the differential transmission (1) via an input shaft (32) and the at least one driveshaft (4, 5) is connected to the input shaft (32) in a torque-transmitting manner directly via a toothing (33) or via a differential (34).

## Revendications

1. Entraînement différentiel (1) destiné à transmettre un couple sur un essieu (2) d'un véhicule automobile (3), comprenant au moins un arbre d'entraînement (4, 5) et au moins un arbre de sortie (6, 7), qui peuvent être reliés par l'intermédiaire d'un couplage (8, 9) à l'intérieur d'un carter (10) de l'entraînement différentiel (1) de manière à transmettre un couple, le couplage (8, 9) pouvant être actionné par l'intermédiaire d'un dispositif d'actionnement (11), le dispositif d'actionnement (11) étant monté sur le carter (10), ledit au moins un arbre de sortie (6, 7) étant monté en rotation par l'intermédiaire d'un palier (12), **caractérisé en ce que** le palier (12) est monté sur le dispositif d'actionnement (11) ; une butée (13) étant agencée sur ledit au moins un arbre de sortie (6, 7), de telle sorte qu'une force d'actionnement (15) destinée à actionner le couplage (8, 9) et agissant au moins dans une direction axiale (14) s'appuie au moins contre la butée (13) par l'intermédiaire du dispositif d'actionnement (11) et du palier (12).

2. Entraînement différentiel (1) selon la revendication 1, dans lequel le carter (10) est constitué par un matériau non métallique (16).

3. Entraînement différentiel (1) selon l'une quelconque des revendications précédentes, dans lequel la force d'actionnement (15) s'appuie contre la butée (13) sans charge pour le carter (10).

4. Entraînement différentiel (1) selon l'une quelconque des revendications précédentes, dans lequel le palier (12) est un palier à rouleaux et comprend une bague intérieure (17) et une bague extérieure (18), la bague intérieure (17) étant agencée sur ledit au moins un arbre de sortie (6, 7) et sur la butée (13), et la bague extérieure (18) étant agencée sur le dispositif d'actionnement (11).

5. Entraînement différentiel (1) selon l'une quelconque des revendications précédentes, dans lequel la butée (13) est formée par une bague support (19), qui est agencée par accouplement de forme sur ledit au moins un arbre de sortie (6, 7) dans la direction axiale (14).

6. Entraînement différentiel (1) selon l'une quelconque des revendications précédentes, dans lequel le dispositif d'actionnement (11) comprend deux disques d'écartement (21, 22) pouvant tourner l'un contre l'autre dans une direction périphérique (20), au moins un premier disque d'écartement (21) étant monté sur le carter (10) et au moins partiellement constitué par un matériau métallique (24).

7. Entraînement différentiel (1) selon l'une quelconque des revendications 1 à 5 précédentes, dans lequel le dispositif d'actionnement (11) pour l'actionnement du couplage (8, 9) comprend au moins un piston (26) pouvant être déplacé dans au moins un cylindre (25) dans la direction axiale (14), ledit au moins un cylindre (25) étant monté sur le carter (10) et au moins partiellement constitué par un matériau métallique (24).

8. Entraînement différentiel (1) selon l'une quelconque des revendications précédentes, dans lequel le couplage (8, 9) est un couplage lamellaire comprenant des lamelles extérieures (27) et des lamelles intérieures (28).

9. Entraînement différentiel (1) selon l'une quelconque des revendications précédentes, dans lequel l'entraînement différentiel (1) comprend deux arbres de sortie (6, 7), qui peuvent respectivement être reliés par l'intermédiaire d'un couplage (8, 9) avec ledit au moins un arbre d'entraînement (4, 5) de manière à transmettre un couple, chaque couplage (8, 9) pouvant être actionné respectivement par l'intermédiaire d'un dispositif d'actionnement (11), les dispositifs d'actionnement (11) étant montés sur le carter (10), chaque arbre de sortie (6, 7) étant respectivement monté en rotation par l'intermédiaire d'un palier (12), chaque palier (12) étant monté sur le dispositif d'actionnement (11) respectif; une butée (13) étant respectivement agencée sur chaque un arbre de sortie (6, 7), de telle sorte qu'une force d'actionnement (15) destinée à actionner le couplage (8, 9) et agissant au moins dans une direction axiale (14) s'appuie au moins contre la butée (13) par l'intermédiaire du dispositif d'actionnement (11) et du palier (12).

10. Entraînement différentiel (1) selon l'une quelconque des revendications 1 à 8 précédentes, dans lequel l'entraînement différentiel (1) comprend deux arbres de sortie (6, 7), uniquement un arbre de sortie (6, 7) pouvant être relié par l'intermédiaire d'un couplage (8, 9) avec ledit au moins un arbre d'entraînement (4, 5) de manière à transmettre un couple.

11. Agencement d'entraînement (29) pour un véhicule automobile (3), comprenant au moins une unité d'entraînement (30) et un entraînement différentiel (1) selon l'une quelconque des revendications précédentes, l'entraînement différentiel (1) étant prévu pour la transmission d'un couple depuis l'unité d'entraînement (30) sur deux roues (31) d'un essieu (2), le couple pouvant être introduit dans l'entraînement différentiel (1) par l'intermédiaire d'un arbre d'entrée (32) et ledit au moins un arbre d'entraînement (4, 5) étant directement relié avec l'arbre d'entrée (32) par l'intermédiaire d'un engrenage (33) ou par l'intermédiaire d'un différentiel (34) de manière à transmettre un couple.
